# EUROPÄISCHE PATENTSCHRIFT

(11) **EP 0 484 336 B1**
(45) Veröffentlichungstag und Bekanntmachung des Hinweises auf die Patenterteilung: **06.04.1994**
(21) Anmeldenummer: 90908225.7
(22) Anmeldetag: 23.05.1990
(51) Int. Cl.: A23B 4/052, A23L 3/16

(54) **ANLAGE ZUM BEHANDELN VON PRODUKTEN, INSBESONDERE LEBENSMITTELN**
FACILITY FOR PROCESSING PRODUCTS, IN PARTICULAR FOOD
INSTALLATION POUR LE TRAITEMENT DE PRODUITS, EN PARTICULIER D'ALIMENTS

(43) Veröffentlichungstag der Anmeldung: 13.05.1992
(73) Patentinhaber: GERMOS-FESSMANN GMBH & CO. KG, D-73630 Remshalden-Grunbach (DE)
(72) Erfinder: FESSMANN, Klaus-Dieter, D-7057 Winnenden (DE)
(74) Vertreter: Ostertag, Reinhard
(86) Internationale Anmeldenummer: EP9000833
(87) Internationale Veröffentlichungsnummer: WO9117662

(56) Entgegenhaltungen:
- US-A- 1 704 650
- US-A- 2 505 973
- US-A- 3 252 200
- US-A- 3 770 148

## Beschreibung

Die Erfindung betrifft eine Anlage zum Behandeln von Produkten, insbesondere Lebensmitteln, gemäß dem Oberbegriff des Anspruches 1 bzw. des Anspruches 2.

Bei dieser aus der US-A-1 704 650 bekannten Behandlungsanlage erfolgt das Hineinbewegen und Herausfahren der Produktträger von Hand. Dies bereitet bei schweren Produktträgern dann Schwierigkeiten, wenn in einer engen Behandlungskammer mehrere Produktträger unter sehr kleinem seitlichen Spiel hintereinander in die Behandlungskammer eingebracht werden sollen.

Ein typisches Beispiel für eine derartige Behandlungsanlage sind Rauchanlagen, in welchen Fleisch und Wurst, sowie andere Lebensmittel wie beispielsweise Käse, bei einer Temperatur bis ca. 70° C behandelt werden. Der Räucherrauch wird durch bekannte industrielle Verfahren, wie beispielsweise unter Verwendung von überhitztem Wasserdampf, Verschwelung oder trockene Destillation erzeugt. Eine Rauchanlage kann aus einem oder mehreren aneinandergereihten Behandlungskammern bestehen. Die Türen in einer derartigen Rauchanlage müssen dicht schließen, sei es die Beschickungstür, sei es die Entladetür, die zu einer anschließenden Behandlungskammer führt. Durch einen dichtschließenden Türmechanismus wird gewährleistet, daß in den verschiedenen Behandlungskammern ein unterschiedliches Klima ausgeregelt werden kann. Weiterhin ist die Dichtigkeit notwendig, um Geruchsbelästigungen durch Raucherrauch zu unterbinden und Emissionen wirksam nachbehandeln zu können.

Ein dichtes Schließen der Türen ist dann gewährleistet, wenn man die Türen mit senkrecht zur Türöffnung gerichteter Bewegungskomponente auf eine kammerfeste Dichtkante zubewegt, die mit einer beim Türrand vorgesehenen elastischen Dichtung zusammenarbeitet. Dies bedeutet, daß man bei der Unterseite der Tür eine über die Bodenfläche hochstehende Schwelle hat. Im Hinblick auf ein sicheres Zurückhalten von Kondepsat und im Hinblick auf ein problemloses Reinigen des Innenraumes der Behandlungskammer ist es ebenfalls wünschenswert, wenn bei der Tür der Kammerboden nicht eben in den Boden des umgebenden Raumes übergeht, vielmehr zusammen mit einer Türschwelle eine Wanne bildet.

Bei dieser Art bekannter Behandlungsanlagen werden Produktträger verwendet, die mit Rädern auf dem Boden der Behandlungskammer laufen und z.B. unter Verwendung von hydraulischen Arbeitszylindern mit großem Hub schrittweise durch die verschiedenen Positionen der Behandlungskammer bewegt werden. Verwendet man derartige auf Rollen laufende Produktträger, kann man aber offensichtlich bei der Tür der Behandlungskammer keine Schwelle vorsehen, die - wie oben dargelegt - im Hinblick auf gute Dichtheit der Tür und im Hinblick auf die Ausbildung des unteren Kammerabschnittes als Wanne an sich wünschenswert wäre.

Durch die vorliegende Erfindung soll daher eine Behandlungsanlage gemäß dem Oberbegriff des Anspruches 1 bzw. 2 so weitergebildet werden, daß ein automatisches Beschicken und Entladen der Behandlungskammern möglich ist, zugleich aber auch ein dichtes Schließen der Tür und ein Zurückhalten auf den Kammerboden gelangender Flüssigkeit gewährleistet ist.

Gemäß einer ersten Alternative ist diese Aufgabe erfindungsgemäß gelöst durch eine Anlage zum Behandeln von Produkten, insbesondere Lebensmitteln, mit mindestens einer dichten Behandlungskammer, welche mindestens eine dicht verschließbare Tür zum Beschicken und/oder Entladen aufweist, und mit einer Fördereinrichtung, welche sich in und/oder durch die Behandlungskammer erstreckt und mindestens eine Tragschiene sowie mindestens einen auf dieser laufenden Produktträger aufweist, wobei die Tragschiene einen Tragschienenabschnitt aufweist, der aus einer mit den benachbarten feststehenden Tragschienenabschnitten fluchtenden Förderstellung in eine Parkstellung bewegbar ist, in welcher die Tür durch den Tragschienenbereich bewegbar ist, und dessen Länge der Länge des Überlappungsbereiches von Türweg und Tragschiene entspricht, die dadurch gekennzeichnet ist, daß der bewegbare Tragschienenabschnitt in vertikaler Richtung verschiebbar ist und ein erstes Umlenkmittel für ein sich durch die Behandlungskammer erstreckendes erstes flexibles Fördermittel in unmittelbarer Nähe der Türinnenseite angeordnet ist, während ein zweites Umlenkmittel für ein auf der Außenseite der Tür vorgesehenes zweites flexibles Fördermittel auf dem entsprechenden feststehenden Tragschienenabschnitt bei dessen der Türöffnung benachbarten Ende angeordnet ist.

Mit der Erfindung ist somit eine problemlose Übergabe eines Produktträgers vom der Behandlungskammer zugeordneten ersten flexiblen Fördermittel zu einem zweiten flexiblen Fördermittel, über welches das Beschicken und/oder Entladen durch die Tür erfolgt, gewährleistet, wobei auch in Förderrichtung verhältnismäßig kurz bauende Laufkopfanordnungen für Produktträger möglich sind. Mit solchen kurz bauenden Anordnungen ist es möglich, auch geringe Abmessungen in Förderrichtung aufweisende Produktträger unter geringem Abstand durch eine Behandlungskammer zu bewegen.

Gemäß einer zweiten Alternative ist diese Aufgabe erfindungsgemäß gelöst durch eine Anlage zum Behandeln von Produkten, insbesondere Lebensmitteln, mit mindestens einer dichten Behandlungskammer, welche mindestens eine dicht verschließbare Tür zum Beschicken und/oder Entladen aufweist, und mit einer Fördereinrichtung, welche sich in und/oder durch die Behandlungskammer erstreckt und mindestens eine Tragschiene sowie mindestens einen auf dieser laufenden Produktträger aufweist, wobei die Tragschiene einen Tragschienenabschnitt aufweist, der aus einer mit den benachbarten feststehenden Tragschienenabschnitten fluchtenden Förderstellung in eine Parkstellung bewegbar ist, in welcher die Tür durch den Tragschienenbereich bewegbar ist, und dessen Länge der Länge des Überlappungsbereiches von Türweg und Tragschiene entspricht, die dadurch gekennzeichnet ist, daß der bewegbare Tragschienenabschnitt an dem außerhalb der Tür liegenden feststehenden Tragschienenabschnitt angelenkt ist, daß ein erstes Umlenkmittel für ein sich durch die Behandlungskammer erstreckendes erstes flexibles Fördermittel in unmittelbarer Nähe der Türinnenseite angeordnet ist, während ein zweites Umlenkmittel für ein auf der Außenseite der Tür vorgesehenes zweites flexibles Fördermittel auf dem verschwenkbaren Tragschienenabschnitt in unmittelbarer Nähe von dessen freiem Ende angeordnet ist und daß für das zweite flexible Fördermittel Führungskörper vorgesehen sind, die mit dem Vorlauftrum bzw. dem Rücklauftrum desselben zusammenarbeiten.

Die weiter oben dargelegten Vorteile der problemlosen Übergabe der Produktträger und der Anlagen-Baugröße erhält man gleichermaßen bei einer solchen Behandlungsanlage.

Hierbei wird mit der Weiterbildung gemäß Anspruch 3 erreicht, daß für die zweiten flexiblen Fördermittel, die dem verschwenkbaren Tragschienenabschnitt zugeordnet sind, keine ständig arbeitende elastische Nachspanneinrichtung zugeordnet zu werden braucht, da sich durch das Verschwenken des bewegbaren Tragschienenabschnittes der vom Fördermittel insgesamt durchlaufene Arbeitsweg nicht ändert.

Mit der Weiterbildung der Erfindung gemäß Anspruch 4 wird auf einfache Weise erreicht, daß der zum Verlagern des bewegbaren Tragschienenabschnittes dienende Antrieb nicht die Last über den bewegbaren Tragschienenabschnitt bewegter Produktträger aufzunehmen braucht. Außerdem ist gewährleistet, daß die Kraftübernahme durch das feststehende Tragschienenende sicher und ohne größere Biegemomente erfolgt.

Oft haben die Tragschienen von Schleppkreisförderern (Power-and-free-Förderern) hohle Tragschienen, z.B. Doppel-C-Schienen, die nach unten offen sind und zwischen sich die Lastrollen und Führungsrollen der Laufköpfe der Produktträger aufnehmen. Mit der Weiterbildung der Erfindung gemäß Anspruch 5 wird erreicht, daß auch über den hohlen Tragschienenquerschnitt bei den Türen der Behandlungskammer eine einwandfreie Abdichtung erzielt wird.

Für das Verschließen einer Behandlungskammer sind im Hinblick auf geringen Platzbedarf insbesondere zweiflüglige Schwenktüren von Vorteil. Nimmt man die Teilung der Tür gemäß Anspruch 6 asymmetrisch vor, so hat man zwischen den beiden Türflügeln eine geradlinige Dichtlinie, da die Dichtlinie nicht durch die den Auflagerabschnitt der Tragschiene aufnehmende Vertiefung läuft.

Die Weiterbildung der Erfindung gemäß Anspruch 7 dient der problemlosen Übergabe eines Produktträgers vom ersten zum zweiten Fördermittel.

Nachstehend wird die Erfindung anhand von Ausführungsbeispielen unter Bezugnahme auf die Zeichnung näher erläutert.

In dieser zeigen:
- Figur 1:: einen vertikalen Längsschnitt durch denjenigen Bereich einer Rauchbehandlungsanlage für Fleischwaren, in welchem eine Rauchbehandlungskammer und eine anschließende Kühlkammer aneinanderstoßen;
- Figur 2:: eine Aufsicht auf die Außenseite eines praktischen Ausführungsbeispieles einer Zwischentür, welche die Rauchbehandlungskammer von einer Kühlkammer trennt;
- Figur 3:: einen horizontalen Schnitt durch den oberen Abschnitt der beiden Zwischentürflügel im Stoßbereich, in vergrößertem Maßstabe; und
- Figur 4:: eine ähnliche Schnittansicht wie Figur 1, in welcher jedoch eine abgewandelte Fördereinrichtung wiedergegeben ist.

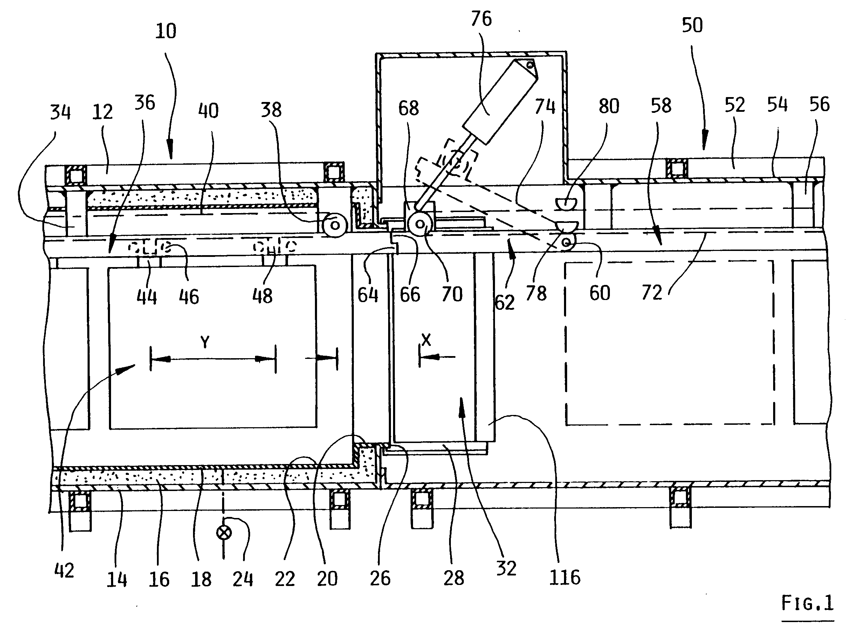

In Figur 1 ist mit 10 insgesamt eine Rauchbehandlungskammer bezeichnet. Zu dieser gehört ein aus Hohlprofilen aufgebautes äußeres Traggerüst 12, an welchem ein Außengehäuse 14 befestigt ist. Auf die Innenfläche des Außengehäuses 14 ist eine Isolierschicht 16 aufgebracht, die ihrerseits durch ein Innengehäuse 18 abgedeckt ist, welches aus Edelstahlblech hergestellt ist.

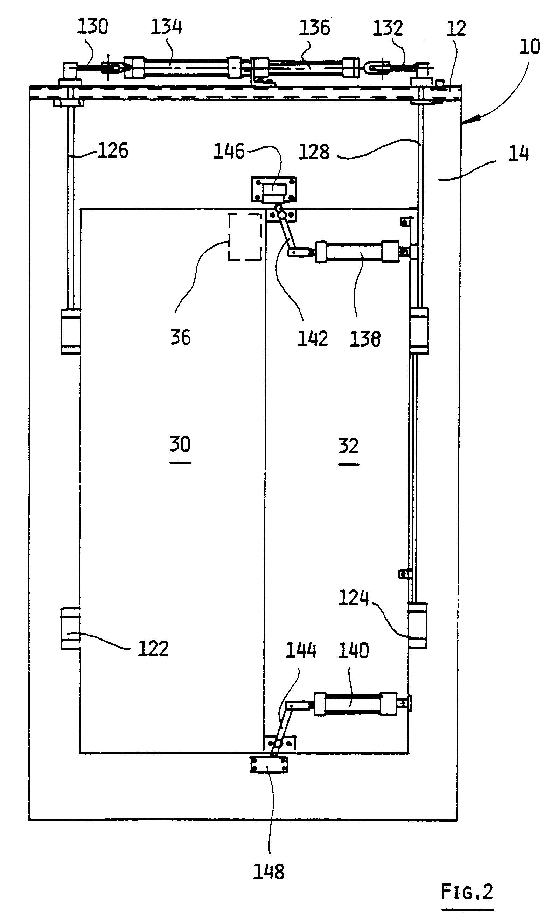

In der in Figur 1 rechts gelegenen Endwand der Behandlungskammer 10 ist eine Türöffnung 20 vorgesehenen. Wie aus der Zeichnung ersichtlich, liegt deren Unterkante über der mit 22 bezeichneten Bodenfläche der Behandlungskammer 10, so daß der untere Kammerabschnitt eine Wanne bildet, die über einen schematisch angedeuteten Ablauf 24 geleert werden kann. Ein umgekanteter, die Türöffnung 20 umgebender Abschnitt des Außengehäuses 14 bildet eine Dichtkante 26, die mit einer elastisch verformbaren Dichtung 28 zusammenarbeitet, die vom Rand eines am Außengehäuse 14 angelenkten Türflügels 32 getragen ist. Dieser kann zusammen mit einem ähnlichen Türflügel 30 (vergl. Figur 2) die Türöffnung 20 verschließen.

Von der Deckenwand des Außengehäuses 14 ist über herabhängende Träger 34 ein Tragschienenabschnitt 36 fest getragen. Einer der Träger 34 ist der Türöffnung 20 unmittelbar benachbart und dient zugleich zum Lagern eines freilaufenden Umlenkrades 38 für eine Förderkette 40. Ein getriebenes Förderketten-Umlenkrad ist im in Figur 1 nicht gezeigten linken Endabschnitt der Behandlungskammer 10 angeordnet.

Insgesamt mit 42 bezeichnete Produktträger, die z.B. ähnlich wie ein Regal ausgebildet sind oder mit Aufhängemöglichkeiten für das Behandlungsgerät versehen sind, hängen über zwei beabstandete Laufköpfe 44 an dem Tragschienenabschnitt 36 im wesentlichen die Form eines nach unten offenen C-Profils oder eines senkrecht gestellten Flachprofils. Zum Führen der Laufköpfe 44 im Inneren oder auf der Tragschiene dienen Stützrollen 46 und/oder Seitenführungsrollen 48.

Der Behandlungskammer 10 ist beispielhaft ein nicht näher gezeigter Dampfrauchgenerator zugeordnet, der durch Hindurchleiten von überhitztem Wasserdampf von etwa 350 bis 400 °C durch Sägespäne Dampfrauch erzeugt, mit welchem in die Behandlungskammer in den Produktträgern 42 eingebrachte Fleisch- und Wurstwaren behandelt werden, so daß sie Farbe, Geschmack und Haltbarkeit erhalten.

Im rechten Teil von Figur 1 ist eine insgesamt mit 50 bezeichnete Kühlkammer wiedergegeben, die ein Traggerüst 52 und ein Außengehäuse 54 umfaßt. Falls gewünscht, kann zusätzliche eine Isolierschicht und ein Innengehäuse vorgesehen sein, wie bei der Behandlungskammer 10.

Die Deckenwand des Außengehäuses 54 trägt über herabhängende Träger 56 einen Tragschienenabschnitt 58, der wie gezeigt unter größerem Abstand von der Türöffnung 20 endet und bei seinem freien Ende einen Gelenkzapfen 60 trägt, auf welchem das eine Ende eines verschwenkbaren Tragschienenabschnittes 62 gelagert ist.

Wie aus Figur 1 ersichtlich, ist das Ende des Tragschienenabschnittes 36 geringfügig über die Ebene der Dichtkante 26 hinausgeführt und hat einen unteren, vorspringenden Auflagerabschnitt 64. Dieser arbeitet formschlüssig mit einem Lagerabschnitt 66 zusammen, der beim freien Ende des verschwenkbaren Tragschienenabschnittes 62 vorgesehen ist.

In der Nachbarschaft des freien Endes des Tragschienenabschnittes 62 ist ein Lagerblock 68 nach oben vorstehend vorgesehen, der ein freilaufendes Umlenkrad 70 für eine zweite Förderkette 72 trägt. Diese dient dazu, über nicht näher gezeigte steuerbare Mitnehmer die Produktträger 42 durch die Kühlkammer 50 zu bewegen.

Die Tragschienenabschnitte 36, 58 und 62 haben gleiches Profil und stellen in der in Figur 1 durch ausgezogene Linien wiedergegebenen Förderstellung des verschwenkaren Tragschienenabschnittes 62 eine glatt durchlaufende Tragschiene für die Produktträger 42 dar.

Zum Herausbewegen des Tragschienenabschnittes 62 aus seiner Förderstellung in eine in Figur 1 gestrichelt bei 74 angedeutete Parkstellung dient ein doppeltwirkender hydraulischer Arbeitszylinder 76, der mit seinem Zylinder am Außengehäuse 54, mit seiner Kolbenstange am Lagerblock 68 angelenkt ist.

Die Parkstellung 74 ist in Figur 1 der Deutlichkeit halber übertrieben angehoben wiedergegeben. In Wirklichkeit braucht der Tragschienenabschnitt 62 nur so weit angehoben zu werden, daß der Türflügel 32 gerade unter ihm hindurch bewegt werden kann. Um ein Arbeiten der Förderkette 72 auch in der Parkstellung zu ermöglichen, sind über dem Gelenkzapfen 60 zwei ballige Arbeitsflächen aufweisende Führungskörper 78, 80 für das Arbeitstrum bzw. das Rücklauftrum der Förderkette 72 vorgesehen.

Figur 1 zeigt die Anlage zum Räuchern von Fleisch- und Wurstwaren in einem Betriebszustand unmittelbar vor dem Überführen des ausgangsseitigen Produktträgers 42 in der Behandlungskammer 10 in die erste, gestrichelt angedeutete Position der Kühlkammer 50, aus welcher zuvor ein Produktträger wegbewegt wurde. Zuvor waren bei in der Parkstellung 74 stehendem Tragschienenabschnitt 62 die beiden Türflügel 30 und 32 geöffnet worden, worauf dann der Tragschienenabschnitt 62 in die durch ausgezogene Linien wiedergegebene Arbeitsstellung bewegt wurde. Durch Ingangsetzen der beiden Förderketten 40 und 72 kann nun der rechts in der Behandlungskammer 10 stehende Produktträger 42 vom Tragschienenabschnitt 36 auf den Tragschienenabschnitt 62 bewegt werden, wobei die Übernahme ohne zusätzliche Hilfsmittel erfolgt, da der Abstand x zwischen den beiden Umlenkrädern 38 und 70 kleiner ist als der Abstand y zwischen den beiden Laufköpfen 44 eines Produktträgers 42. Bei Ausbildung der Laufköpfe 44 in Form nur einer Laufrolle muß an dieser eine Vorrichtung befestigt werden, die aus einem horizontalen Träger sowie zwei an den jeweiligen Enden befestigte Zapfen beteht und somit eine Übernahme des Produktträgers 42 von einer Behandlungskammer in die andere ermöglicht.

Mit der Übergabe des Produktträgers 42 an die Kühlkammer 50 rückt der nachfolgende Produktträger in der Behandlungskammer 10 in die am weitesten rechts gelegene Position. Er kann dann gleich weiter in die Kühlkammer 50 überführt werden, man kann aber den Antrieb für die Förderkette 50 nun auch ausschalten, falls die Ware in diesem Produktträger eine weitere Behandlung benötigt.

Nach Überführen der gewünschten Anzahl von Produktträgern 42 aus der Behandlungskammer 10 in die Kühlkammer 50 wird durch den Arbeitszylinder 76 der Tragschienenabschnitt 62 in die Parkstellung 74 gebracht, worauf die Türflügel 30 und 32 geschlossen werden. Der Tragschienenabschnitt 62 verbleibt nun solange in seiner Parkstellung, bis die Türflügel 30 und 32 zur Übergabe eines weiteren Produktträgers wieder geöffnet werden. Auch während dieser Zeit können aber Produktträger aus der Kühlkammer 50 herausbewegt werden, da die Förderkette 72 auch dann funktionsfähig ist, wenn der Tragschienenabschnitt 62 in der Parkstellung 74 steht, wie oben schon dargelegt.

Die Behandlungskammer hat eine Beschickungstür, die ähnlich ausgebildet sein kann wie die in Figur 1 wiedergegebene Zwischentür zwischen Behandlungskammer und Kühlkammer, wobei vor der Beschickungstür ein verschwenkbarer Tragschienenabschnitt vorgesehen ist, der spiegelbildlich zur in Figur 1 gezeigten Anordnung ausgebildet ist und eine Verbindung zum Produktträger-Befüllungsabschnitt der Gesamtanlage herstellt. Analog hat die Kühlkammer 50 am stromabseitigen Ende eine Entladetür, die ähnlich aufgebaut sein kann wie die oben beschriebene Zwischentür und hinter der ein verschwenkbarer Tragschienenabschnitt liegt, der dem in Figur 1 Mitte gezeigten entspricht und eine Verbindung zu dem Produktentnahmeabschnitt der Gesamtanlage herstellt. Letzterer ist über einen Produktträger-Rückführabschnitt der Tragschiene mit dem Lade- oder Bestückungsabschnitt der Gesamtanlage verbunden.

Wie aus Figur 2 ersichtlich, ist der Türflügel 30 um mindestens die Hälfte der Breite der Tragschiene über die Mittelebene der Türöffnung 20 hinausgezogen, so daß er den Tragschienenabschnitt 36 vollständig überdecken kann.

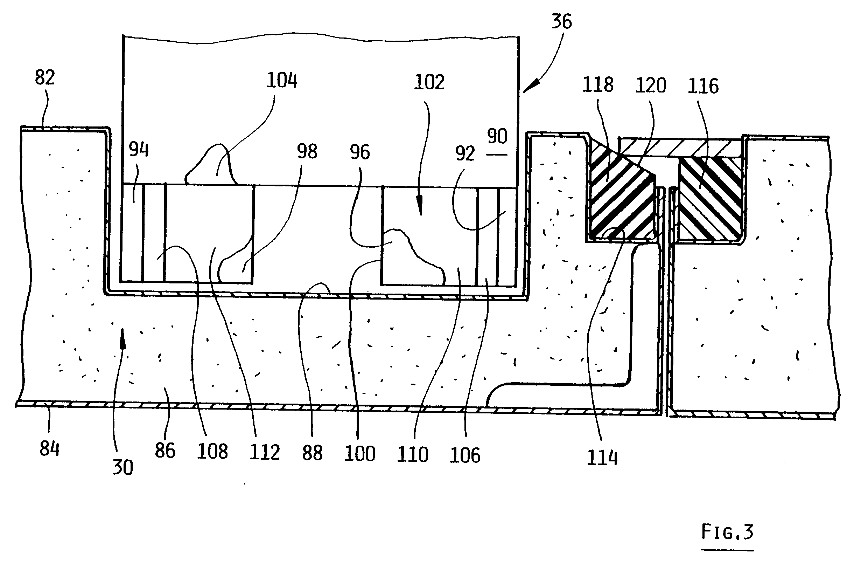

Wie aus Figur 3 ersichtlich, besteht der Türflügel 30 aus einer inneren Türwand 82 und einer äußeren Türwand 84 sowie einer dazwischen liegenden Isolierschicht 86 aus Schaumstoff. Die Türwand 82 hat im Bereich des Tragschienenabschnittes 36 eine Vertiefung 88, in welche der Tragschienenabschnitt 36 bei geschlossener Tür eingreift.

Wie aus Figur 3 ebenfalls ersichtlich, hat die Tragschiene eine horizontale obere Basiswand 90, an welche vertikal herabhängende Schenkel 92, 94 angeformt sind. Diese tragen ihrerseits untere horizontale Tragflansche 96, 98, die zusammen einen Durchgang 100 begrenzen, durch welchen sich die Laufköpfe 44 bewegen können.

Ein Kunststoffeinsatz in die Tragschiene, der mit den verschiedenen Rollen der Laufköpfe 44 zusammenarbeitet, trägt insgesamt das Bezugszeichen 102. Er hat eine Basiswand 104, Schenkel 106, 108 sowie Tragflansche 110, 112, welche die Tragflansche 96, 98 überdecken.

Wie bereits ausgeführt, kann die Tragschiene auch aus einem senkrecht gestellten Flachprofil bestehen, auf dem Rollen bewegt werden, an denen die Produktträger 42 mittels eines Bügels befestigt sind.

Der Türflügel 32 ist ein ähnlicher, mit Schaumstoff ausgefüllter Blech-Hohlkörper wie der Türflügel 30. Beide Türflügel haben am Rand ihrer Innenseite eine umlaufende Rinne 114, welche in den der Dichtkante 26 gegenüberstehenden Abschnitten die jeweilige Dichtung 28 aufnimmt. In dem der Türmitte benachbarten vertikalen Rinnenabschnitt des Türflügels 32 ist eine L-förmigen Querschnitt aufweisende Anschlagleiste 116 angeordnet. Diese arbeitet mit einem benachbarten vertikalen Abschnitt 118 der Dichtung 28 des Türflügels 32 zusammen, der eine schräg nach außen abfallende Dichtfläche 120 aufweist.

Wie aus Figur 2 ersichtlich, sind die Türflügel 30, 32 über Scharniere 122 bzw. 124 am Außengehäuse 14 der Behandlungskammer 10 angelenkt. Zumindest eines der Scharniere 122 bzw. 124 ist mit seinem drehbaren Scharnierteil an einer Stellwelle 126 bzw. 128 befestigt, die über einen Kurbelarm 130, 132 von einem doppeltwirkenden Arbeitszylinder 134 bzw. 136 her angetrieben wird.

Auf dem Türflügel 32 sind im oberen bzw. unteren Abschnitt weiter doppeltwirkende Arbeitszylinder 138, 140 angebracht, die auf Riegel 142, 144 arbeiten. Das freie Ende der Riegel 142, 144 arbeitet jeweils mit einer Riegelfalle 146 bzw. 148 zusammen.

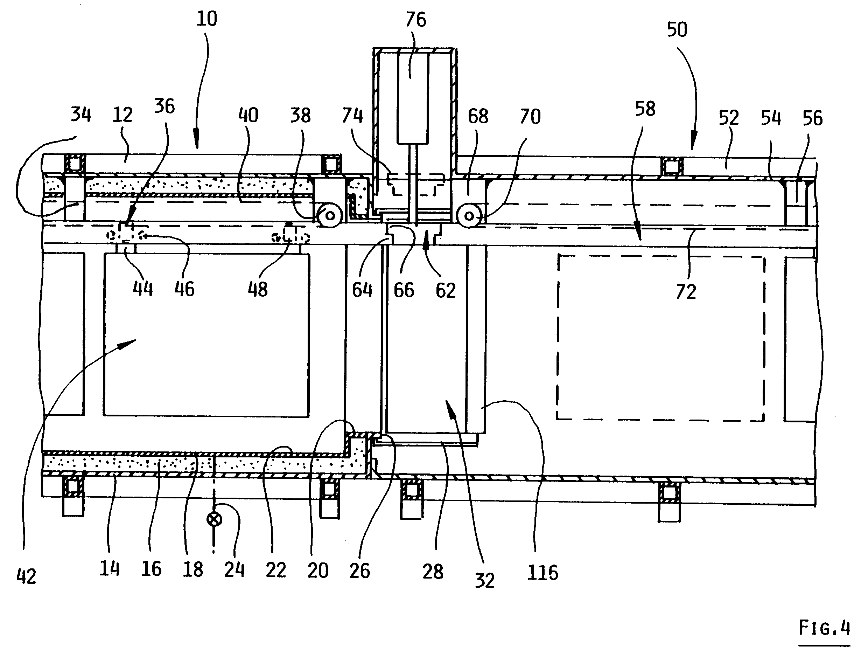

Bei der in Figur 4 gezeigten abgewandelten Behandlungsanlage sind Anlagenteile, die unter Bezugnahme auf Figur 1 schon erläutert wurden, wieder mit denselben Bezugszeichen versehen; diese Teile brauchen nachstehend nicht nochmals im einzelnen beschrieben zu werden.

Gemäß Figur 4 ist der Tragschienenabschnitt 62 kurz und ist direkt auf das Ende der Kolbenstange des Arbeitszylinders 76 aufgesetzt, der nun vertikal ausgerichtet ist. Der Tragschienenabschnitt 62 ist nun gerade so lang, wie zum Durchlassen des Türflügels 30 durch die Tragschienenanordnung notwendig. Der Lagerblock 68 ist dem stromaufseitigen Ende des Tragschienenabschnittes 58 unmittelbar benachbart und dient zugleich zum festen Haltern dieses Schienenendes. Das freie Ende des Tragschienenabschnittes 58 ist ähnlich wie das Ende des Tragschienenabschnittes 36 mit einem Auflagerabschnitt versehen, durch welchen das komplementär geformte rechts liegende Ende des Tragschienenabschnittes 62 abgestützt werden kann. Bei dieser Ausbildung des bewegbaren Tragschienenabschnittes 62 und des benachbarten Endes des Tragschienenabschnittes 58 können dann die Führungskörper 78, 80 entfallen.

Bei den beschriebenen Ausführungsbeispielen hatte die Behandlungskammer jeweils eine nach außen öffnende Tür, und entsprechend lag der bewegbare Tragschienenabschnitt außerhalb der Behandlungskammer. Es versteht sich, daß man bei einer Behandlungskammer mit nach innen öffnender Tür den bewegbaren Tragschienenabschnitt analog im Inneren der Behandlungskammer vorsieht.

## Patentansprüche

1. Anlage zum Behandeln von Produkten, insbesondere Lebensmitteln, mit mindestens einer dichten Behandlungskammer (10), welche mindestens eine dicht verschließbare Tür (30, 32) zum Beschicken und/oder Entladen aufweist, und mit einer Fördereinrichtung (36 bis 48, 58 bis 72), welche sich in und/oder durch die Behandlungskammer (10) erstreckt und mindestens eine Tragschiene (36, 58, 62) sowie mindestens einen auf dieser laufenden Produktträger (42) aufweist, wobei die Tragschiene (36, 58, 62) einen Tragschienenabschnitt (62) aufweist, der aus einer mit den benachbarten feststehenden Tragschienenabschnitten (36,58) fluchtenden Förderstellung in eine Parkstellung (74) bewegbar ist, in welcher die Tür (30, 32) durch den Tragschienenbereich bewegbar ist, und dessen Länge der Länge des Überlappungsbereiches von Türweg und Tragschiene entspricht, dadurch gekennzeichnet, daß der bewegbare Tragschienenabschnitt (62) in vertikaler Richtung verschiebbar ist und ein erstes Umlenkmittel (38) für ein sich durch die Behandlungskammer (10) erstreckendes erstes flexibles Fördermittel (40) in unmittelbarer Nähe der Türinnenseite angeordnet ist, während ein zweites Umlenkmittel (70) für ein auf der Außenseite der Tür (30, 32) vorgesehenes zweites flexibles Fördermittel (72) auf dem entsprechenden feststehenden Tragschienenabschnitt (58) bei dessen der Türöffnung (20) benachbarten Ende angeordnet ist.

2. Anlage zum Behandeln von Produkten, insbesondere Lebensmitteln, mit mindestens einer dichten Behandlungskammer (10), welche mindestens eine dicht verschließbare Tür (30, 32) zum Beschicken und/oder Entladen aufweist, und mit einer Fördereinrichtung (36 bis 48, 58 bis 72), welche sich in und/oder durch die Behandlungskammer (10) erstreckt und mindestens eine Tragschiene (36, 58, 62) sowie mindestens einen auf dieser laufenden Produktträger (42) aufweist, wobei die Tragschiene (36, 58, 62) einen Tragschienenabschnitt (62) aufweist, der aus einer mit den benachbarten feststehenden Tragschienenabschnitten (36, 58) fluchtenden Förderstellung in eine Parkstellung (74) bewegbar ist, in welcher die Tür (30, 32) durch den Tragschienenbereich bewegbar ist, und dessen Länge der Länge des Überlappungsbereiches von Türweg und Tragschiene entspricht, dadurch gekennzeichnet, der bewegbare Tragschienenabschnitt (62) an dem außerhalb der Tür liegenden feststehenden Tragschienenabschnitt (58) angelenkt ist, daß ein erstes Umlenkmittel (38) für ein sich durch die Behandlungskammer (10) erstrekkendes erstes flexibles Fördermittel (40) in unmittelbarer Nähe der Türinnenseite angeordnet ist, während ein zweites Umlenkmittel (70) für ein auf der Außenseite der Tür (30, 32) vorgesehenes zweites flexibles Fördermittel (72) auf dem verschwenkbaren Tragschienenabschnitt (62) in unmittelbarer Nähe von dessen freiem Ende angeordnet ist und daß für das zweite flexible Fördermittel (72) Führungskörper (78, 80) vorgesehen sind, die mit dem Vorlauftrum bzw. dem Rücklauftrum desselben zusammenarbeiten.

3. Anlage nach Anspruch 2, dadurch gekennzeichnet, daß die beiden Führungskörper (78, 80) in Förderrichtung gesehen beim Schwenkpunkt (60) des verschwenkbaren Tragschienenabschnittes (62) liegen.

4. Anlage nach einem der Ansprüche 1 bis 3, dadurch gekennzeichnet, daß ein Endabschnitt eines feststehenden Tragschienenendabschnittes (36) in unmittelbarer Nachbarschaft der Türinnenseite abgestützt (34) ist und einen durch die Türöffnung (20) überstehende Auflagerabschnitt (64) aufweist, der mit einem komplementären Lagerabschnitt (66) des bewegbaren Tragschienenabschnittes (62) zusammenarbeitet.

5. Anlage nach Anspruch 4, dadurch gekennzeichnet, daß der Auflagerabschnitt (64) kürzer ist als der Dicke der Tür (30, 32) entspricht und bei geschlossener Tür in einer auf der Türinnenseite vorgesehenen Vertiefung (88) Aufnahme findet.

6. Anlage nach Anspruch 5, dadurch gekennzeichnet, daß die Tür zwei ungleich breite Türflügel (30, 32) aufweist und die Vertiefung (88) vollständig in einem (32) der Türflügel (30,32) vorgesehen ist.

7. Anlage nach einem der Ansprüche 1 bis 6, dadurch gekennzeichnet, daß der Abstand (x) von erstem Umlenkmittel (38) und zweiten Umlenkmittel (70) kleiner ist als der Abstand (y) zweier Laufköpfe (44) oder einer horizontalen Halterung mit zwei Zapfen an den Enden, über welche jeweils ein Produktträger (42) auf der Tragschiene (36, 58, 62) läuft.

## Claims

1. A system for processing products, particularly food, comprising at least one leak proof treatment chamber (10) including at least one fluid tight door (30, 32) for charging and/or discharging of the treatment chamber and comprising conveyor means (36-48, 58-72) extending in and/or through the treatment chamber (10) and including at least one conveyor rail (36, 58, 62) as well as at least one product carrier (42) running on the latter, the conveyor rail (36, 58, 62) being formed with a rail section (62) movable between a conveying position, wherein it is aligned with adjacent stationary rail sections (36, 58), and a park position (74), wherein the door (30, 32) can be moved through the area normally occupied by the conveyor rail, the longitudinal dimension of the movable rail section (62) corresponding to the length of the interpenetration area of the path of the door and of the conveyor rail, characterized in that the movable rail section (62) is arranged for shifting movement in vertical direction and in that first return means (38) associated to first flexible conveyor means (40) extending through the treatment chamber (10) are arranged in the immediate vicinity of the interior face of the door, second return means (70) associated to second flexible conveying means (72) arranged at the exterior side of the door (30, 32) being arranged on the respective stationary rail section (58) at a location being adjacent to the end portion thereof neighbouring the doorway (20).

2. A system for processing products, particularly food, comprising at least one leak proof treatment chamber (10) including at least one fluid tight door (30, 32) for charging and/or discharging of the treatment chamber and comprising conveyor means (36-48, 58-72) extending in and/or through the treatment chamber (10) and including at least one conveyor rail (36, 58, 62) as well as at least one product carrier (42) running on the latter the conveyor rail (36, 58, 62) being formed with a rail section (62) movable between a conveying position, wherein it is aligned with adjacent stationary rail sections (36, 58), and a park position (74), wherein the door (30, 32) can be moved through the area normally occupied by the conveyor rail, the longitudinal dimension of the movable rail section (62) corresponding to the length of the interpenetration area of the path of the door and of the conveyor rail, characterized in that the movable rail section (62) is pivotally connected to the stationary rail section (58) being located outside of the door, in that first return means (38) associated to first flexible conveying means (40) extending through the treatment chamber (10) are provided in the immediate vicinity of the interior face of the door, second return means (70) associated to second flexible conveying means (72) arranged outside of the door (30, 32) being arranged on the pivotable rail section (62) at a location thereof being immediately adjacent to its free end, and in that guide members (78, 80) are provided cooperating with the operating run and the return run of the second flexible conveying means (72), respectively.

3. The system in accordance with claim 2, characterized in that the two guide members (68, 80) are arranged at the pivot point (60) of the pivotable rail section (62) as seen in the conveying direction.

4. A system in accordance with one of claims 1 to 3, characterized in that an end portion of a stationary rail section (36) is supported at a location being immediately adjacent to the inner face of the door and is formed with a support portion (64) projecting through the doorway (20) and cooperating with a complementary shaped support portion (66) of the movable rail section (62).

5. The system in accordance with claim 4, characterized in that the support portion (64) is of a longitudinal dimension being smaller than the thickness of the door (30, 32) and the interior face of the door is formed with a recess (88) receiving the support portion (64), when the door is closed.

6. The system in accordance with claim 5, characterized in that the door comprises two door wings (30, 32) of different breadth and in that the recess (88) is completely formed in one (32) of the door wings (30, 32).

7. The system in accordance with one of claims 1 to 6, characterized in that the distance (x) defined between the first return means (38) and the second return means (70) is smaller than the distance (y) defined between two trolleys (44) or horizontal carrying means including two pins at the end thereof, by dint of which the product carriers (42) run on the conveyor rail (36, 58, 62), respectively.

## Revendications

1. Installation pour le traitement de produits, en particulier d'aliments, avec au moins une chambre de traitement étanche (10) qui présente au moins une porte (30, 32), pouvant être hermétiquement fermée, pour le chargement et/ou le déchargement, et avec un dispositif transporteur (36 à 48, 58 à 72), qui s'étend dans et/ou à travers la chambre de traitement (10) et qui présente au moins un rail porteur (36, 58, 62) ainsi qu'au moins un élément porteur de produits (42) roulant sur ce rail, le rail porteur (36, 58, 62) présentant un tronçon de rail porteur (62) qui peut être déplacé, d'une position de transport en alignement avec les tronçons voisins fixes de rail porteur (36, 58), dans une position de stationnement (74) dans laquelle la porte (30, 32) peut être déplacée dans la région du rail porteur, et tronçon dont la longueur correspond à la longueur de la région de chevauchement entre la course de la porte et le rail porteur, **caractérisée** en ce que le tronçon mobile de rail porteur (62) peut être coulissé en direction verticale et un premier moyen de renvoi (38), pour un premier moyen de transport flexible (40) s'étendant à travers la chambre de traitement (10), est disposé au voisinage immédiat du côté intérieur de la porte, tandis qu'un second moyen de renvoi (70), pour un second moyen de transport flexible (72) prévu sur le côté extérieur de la porte (30, 32), est disposé sur le tronçon fixe de rail porteur correspondant (58), à son extrémité voisine de l'ouverture (20) de la porte.

2. Installation pour le traitement de produits, en particulier d'aliments, avec au moins une chambre de traitement étanche (10) qui présente au moins une porte (30, 32), pouvant être hermétiquement fermée, pour le chargement et/ou le déchargement, et avec un dispositif transporteur (36 à 48, 58 à 72), qui s'étend dans et/ou à travers la chambre de traitement (10) et qui présente au moins un rail porteur (36, 58, 62) ainsi qu'au moins un élément porteur de produits (42) roulant sur ce rail, le rail porteur (36, 58, 62) présentant un tronçon de rail porteur (62) qui peut être déplacé, d'une position de transport en alignement avec les tronçons voisins fixes de rail porteur (36, 58), dans une position de stationnement (74) dans laquelle la porte (30, 32) peut être déplacée dans la région du rail porteur, et tronçon dont la longueur correspond à la longueur de la région de chevauchement entre la course de la porte et le rail porteur, **caractérisée** en ce que le tronçon mobile de rail porteur (62) est articulé au tronçon fixe de rail porteur (58) situé à l'extérieur de la porte, en ce qu'un premier moyen de renvoi (38), pour un premier moyen de transport flexible (40) s'étendant à travers la chambre de traitement (10), est disposé au voisinage immédiat du côté intérieur de la porte, tandis qu'un second moyen de renvoi (70), pour un second moyen de transport flexible (72) prévu sur le côté extérieur de la porte (30, 32), est disposé sur le tronçon pivotant de rail porteur (62) au voisinage immédiat de son extrémité libre, et en ce que des corps de guidage (78, 80) sont prévus pour le second moyen de transport flexible (72), corps qui coopèrent respectivement avec la branche aller et la branche de retour dudit second moyen de transport.

3. Installation selon la revendication 2, **caractérisée** en ce que les deux corps de guidage (78, 80) se trouvent, vu dans la direction de transport, au point de pivotement (60) du tronçon pivotant de rail porteur (62).

4. Installation selon l'une quelconque des revendications 1 à 3, **caractérisée** en ce qu'une partie terminale d'un tronçon fixe de rail porteur (36) est soutenue (34) au voisinage immédiat du côté intérieur de la porte et présente une partie d'appui (64), qui dépasse de l'ouverture (20) de la porte et coopère avec une partie de palier complémentaire (66) du tronçon mobile de rail porteur (62).

5. Installation selon la revendication 4, **caractérisée** en ce que la partie d'appui (64) est plus courte que l'épaisseur de la porte (30, 32) et, lorsque la porte est fermée, se loge dans un renfoncement (88) prévu sur le côté intérieur de la porte.

6. Installation selon la revendication 5, **caractérisée** en ce que la porte présente deux battants (30, 32) de largeurs différentes, et le renfoncement (88) est prévu dans son intégralité dans un (32) des battants de porte (30, 32).

7. Installation selon l'une quelconque des revendications 1 à 6, **caractérisée** en ce que la distance (x) entre le premier moyen de renvoi (38) et le second moyen de renvoi (70) est inférieure à la distance (y) entre deux têtes de roulement (44), ou deux tourillons prévus aux extrémités d'un support horizontal, par l'intermédiaire desquels un élément porteur de produits respectif (42) roule sur le rail porteur (36, 58, 62).
